# EUROPEAN PATENT SPECIFICATION

(11) **EP 2 520 170 B1**
(45) Date of publication and mention of the grant of the patent: **19.04.2017**
(21) Application number: 12165883.5
(22) Date of filing: 27.04.2012
(51) Int. Cl.: A21C 3/02

(54) **Apparatus for making dough shapes, particularly for preparing croissants**
Vorrichtung zum Herstellen von Teigformlingen, insbesondere zum Formen von Croissants
Dispositif pour fabriquer des formes en pâte, en particulier pour des croissants

(30) Priority: 02.05.2011 IT VR20110088
(43) Date of publication of application: 07.11.2012
(73) Proprietor: RONDO SCHIO S.R.L., 36015 SCHIO (VI) (IT)
(72) Inventor: Scalzeri, Andrea, 36010 Roana VI (IT)
(74) Representative: Modiano, Micaela Nadia

(56) References cited:
- EP-A1- 0 327 856
- EP-A1- 0 372 879
- EP-A2- 2 213 176

## Description

The present invention relates to an apparatus for making dough shapes, particularly for preparing croissants.

Currently, lines for the production of food products, such as croissants, are constituted typically by a device for producing a ribbon of dough which is then fed to a conveyor belt.

A first cutting device is generally located along the conveyor belt and is designed to cut and divaricate the continuous ribbon of dough into strips of a specific width, which is a function of the dimensions and geometric characteristics of the final product.

Downstream of the first cutting device a second cutting device is provided, which is adapted to divide the respective dough strips into dough shapes, which are typically triangular.

A device for spacing and aligning the triangular dough shapes is located along the conveyor belt and is designed to orient the triangular dough shapes so that their base is oriented in the advancement direction of the conveyor belt used to move the shapes.

Downstream of this device a device for calibrating the dough shapes is provided, which is constituted typically by a pair of calibration rollers which are meant to reduce the thickness of the dough shapes and elongate the triangle in order to facilitate its rolling in a specific number of turns.

Downstream of the shape calibration device a filling device and a rolling device for the shapes can optionally be provided.

It has been found that during the passage of the dough shapes through the calibration device very often there is a transverse displacement of the tip of the triangle, with a consequent lack of symmetry of the provided croissant.

This drawback is extremely frequent if:
the thickness reduction provided by the calibration rollers is very large;
the dough triangles to be treated are very long and slender (in which, therefore, the height of the triangles is significantly greater than the base);
the ribbon of dough that constitutes the triangle is composed of layers of different dough, optionally separated by layers of fat, cocoa, cream, etc.;
there are uneven traces of flour, oil, water on the surface on which the shapes rest.

In order to obviate this drawback, an apparatus for making croissants has been proposed which is the subject of EPA No. 0372879A1 in the name of Rheon Automatic Machinery Co. Ltd., which has, downstream of the calibration device with respect to the advancement direction of the shape conveyor belt, rollers or belts which are designed to guide the dough shapes toward the calibration device.

However, this solution has drawbacks. In particular, by applying the Rheon solution, the presser or traction roller of the belts, which is arranged proximate to the upper calibration roller, still has a radial space occupation which does not make it possible to "follow" the products up to the inlet of the calibration device.

This causes guiding to be no longer provided, losing engagement with the tip of the shape, in the most critical step of insertion, the one in which the dough that accumulates upstream of the calibration rollers, if it is not retained, arranges itself haphazardly, consequently causing an oscillation of the trailing end.

Moreover, the dough shapes are conveyed on the conveyor belt at a preset speed, while during calibration the shapes undergo a positive variation in linear speed, with the consequence that the portion of the shape that is upstream of the calibration device slips on the conveyor belt.

The presser adopted in the Rheon solution must therefore work at a speed which is equal to that of the conveyor belt before the shape enters the calibration device and at a speed that is slightly lower than the calibration speed when the shape is inserted.

If the presser is made to operate at two speeds, the productivity of the machine is reduced, since it is necessary to reduce the number of calibration cycles per unit time because it is not possible to have more than one shape at a time under the presser

In a further document, EP 2 213 176 A2, Rheon discloses a solution for a dough extender according to the preamble of claim 1. The dough extender is constituted by a pressure roller suitable to press the dough transported by a conveyor belt. The peripheral speed of the pressure roller is set approximately equal to the transportation speed of the conveyor. The pressure roller is provided to be vertically movable, hence lowered in the active position, integrally with an upper roller of the extender that presses the dough onto a corresponding lower roller.

The aim of the present invention is to provide an apparatus for making dough, particularly for preparing croissants, which makes it possible to eliminate or at least reduce drastically the above mentioned drawback.

Within this aim, an object of the present invention is to provide an apparatus for making dough, particularly for preparing croissants, which is capable of obtaining, in output from the calibration device, dough shapes or triangles which are extremely symmetrical even if their length is extremely greater than their width.

A further object of the present invention is to propose an apparatus for making dough, particularly for providing croissants, which is extremely flexible and reliable and also has extremely small space occupations in the vicinity of the calibration device.

Another object of the apparatus for making dough, particularly for providing croissants, according to the invention is to have a production cost which is competitive so as to make its use advantageous also from an economic standpoint.

This aim, as well as these and other objects which will become better apparent hereinafter, are achieved by an apparatus for making dough, particularly for providing croissants, according to the provisions of claim 1.

Further characteristics and advantages of the invention will become better apparent from the description of some preferred but not exclusive embodiments of the apparatus for making dough, particularly for providing croissants, according to the present invention, illustrated by way of nonlimiting example in the accompanying drawings, wherein:
Figure 1 is a perspective view of the calibration device according to the invention;
Figure 2 is a perspective view which omits, for the sake of greater clarity, parts of the supporting structure of the conveyor belt in which the dough shapes are placed at the alignment device arranged upstream of the calibration device and in which the presser bodies are in the inactive condition;
Figure 3 is a view, similar to the preceding one, in which the dough shapes are positioned at the inlet of the calibration device and in which the presser bodies are in the inactive condition;
Figure 4 is a view, similar to Figure 2 and Figure 3, in which the dough shapes are arranged in engagement with the calibration device and in which the presser bodies are in the step of passing from the inactive condition to the active condition;
Figure 5 is a view, similar to the preceding one, with the presser bodies in the active condition;
Figure 6 is a view, similar to the preceding one, with the presser bodies in the inactive condition and with the dough shapes now calibrated and arranged upstream of the calibration device;

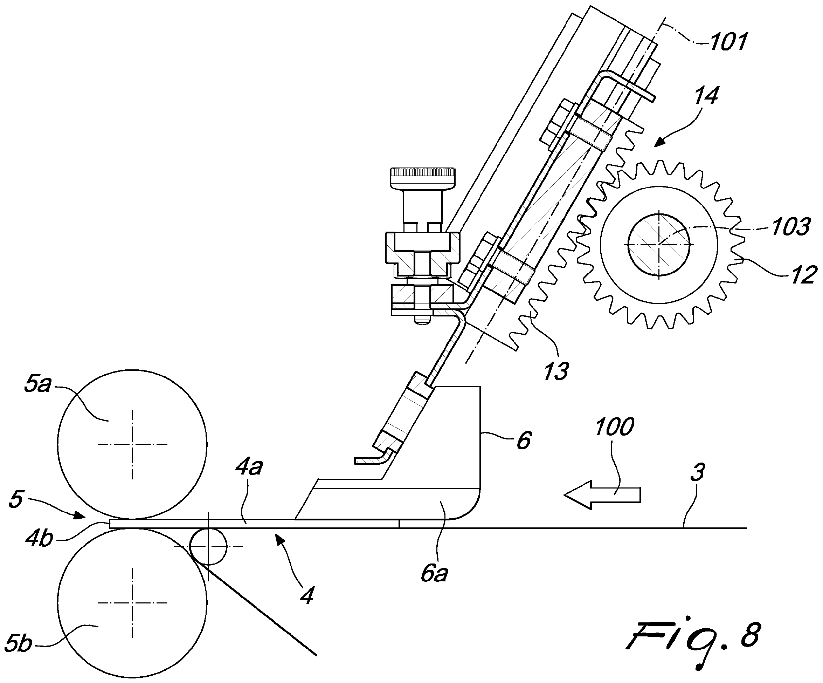

Figures 7 and 8 are a sectional view, on a substantially vertical plane of arrangement which is parallel to the advancement direction, of a contact element respectively in the inactive condition and in the active condition.

In the exemplary embodiments that follow, individual characteristics, given in relation to specific examples, may actually be interchanged with other different characteristics that exist in other exemplary embodiments.

With reference to the figures, the present invention relates to an apparatus, generally designated by the reference numeral 1, for making dough, particularly for preparing croissants.

The apparatus 1 comprises a supporting structure 2 for a conveyor belt 3 for dough shapes 4.

The conveyor belt 3 can move, due to the action of per se known movement devices, along an advancement direction which is designated in the figures by the arrow 100.

The apparatus 1 has, along the extension of the conveyor belt 3, at least one device 5 for calibrating the dough shapes 4. By way of example, the calibration device 5 comprises a pair of calibration cylinders (5a, 5b) which are arranged so that their axis is perpendicular to the advancement direction 100 in order to define a passage opening designed to be crossed by the dough shapes 4 so as to cause a reduction in their thickness.

According to the present invention, the apparatus 1 comprises at least one presser body 6, which is arranged upstream of the calibration device 5 with respect to the advancement direction 100 of the conveyor belt 3.

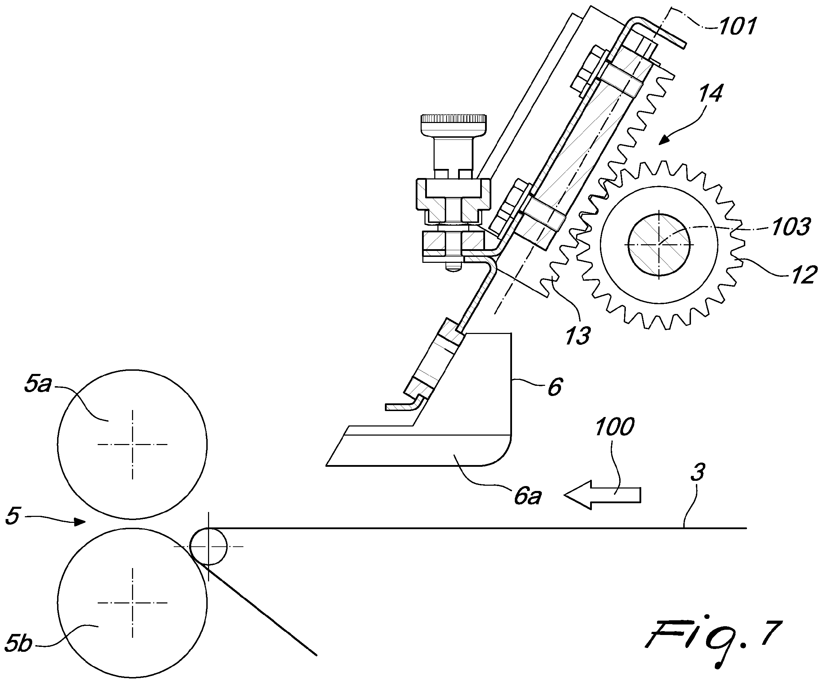

In particular, the presser body 6 can move with respect to the conveyor belt 3 between an inactive condition (shown in Figure 7), in which it is arranged so as to be spaced and advantageously raised with respect to a dough shape 4 that is advancing on the conveyor belt 3, and an active condition, in which it is kept pressed against the surface 4a that is arranged upward during use of the dough shape 4 that is advancing on the conveyor belt 3.

Moreover, the apparatus 1 is provided with means 10 for the relative movement of the or of each presser body 6 with respect to the dough shape or shapes 4; the relative movement means 10 are adapted to allow the temporary transition of the presser body 6 to the active condition when the dough shape is partially engaged with the calibration device 5.

In greater detail, the presser body 6 is kept in the active condition in order to make contact with the dough shape 4 for a presettable period of time.

The relative movement means 10 are, for this purpose, adapted to return the or each presser body 6 to the inactive condition once the presettable period of time has elapsed.

According to a preferred embodiment, the presser body 6 comprises at least one contact element 6a.

Each contact element 6a is designed to engage a rear portion, along the advancement direction 100, of a respective dough shape 4 in order to block its transverse displacement during the passage of the front portion of the dough shape 4 through the calibration device 5.

The contact elements 6a advantageously have, at the surface designed to make contact against the shape 4, two or more longitudinal blades, which in practice run parallel to the advancement direction 100 and are designed to cut into the upper surface of the dough shapes 4, preventing, in the active condition, the shapes 4 from being able to move transversely, therefore being able to move only toward the calibration device 5 at the calibration speed.

The supporting structure 2 of the apparatus 1 comprises a supporting footing, conveniently constituted by two shoulders 2a and 2b, for the contact element or elements 6a.

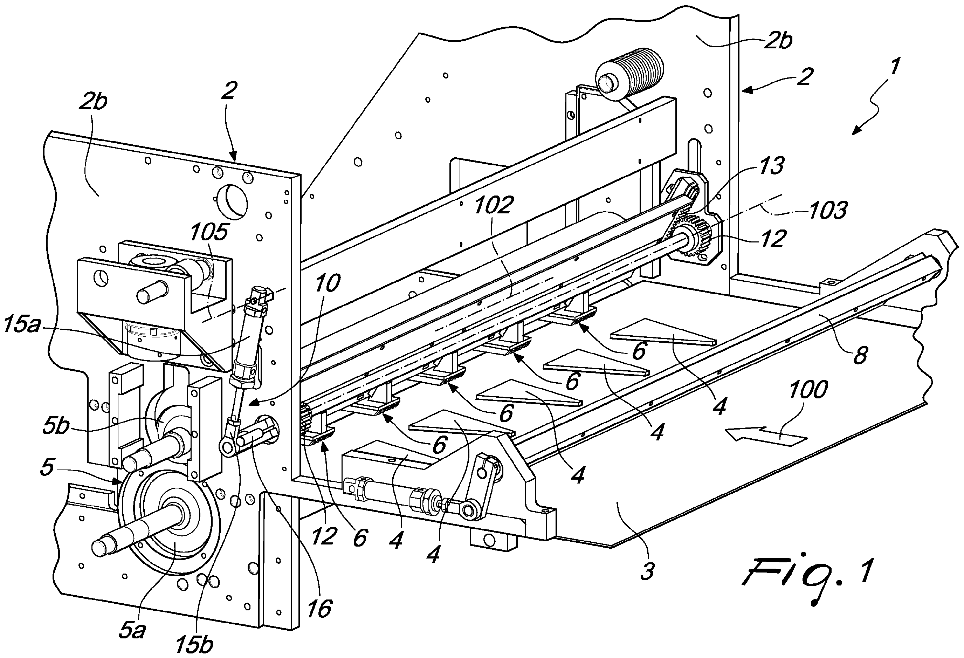

With reference to the embodiment shown in Figure 1, the relative movement means 10 comprise at least one linear actuator 11, which is adapted to move the or each contact element 6a between the active condition and the inactive condition, and vice versa, along a respective movement direction 101.

Conveniently, the movement direction 101 is inclined with respect to the advancement direction 100 toward the calibration device 5, passing from the inactive condition to the active condition.

In this manner, essentially two advantages are achieved: first of all, it is easier to manage the movement of the contact elements 6a, since they move to the vicinity of the calibration device 5 only at the active condition, and this makes it possible to position the linear actuator or actuators 11 so that they are at least partially spaced with respect to the calibration device 5, with an evident increase of the possibilities to manage space occupations since it is in any case possible to "guide" the shape 4 substantially until it arrives at the passage opening between the calibration rollers 5a and 5b.

In this regard, the upper portion of the tip of the contact elements 6a might have a curvilinear shape, with the concavity directed toward the first calibration roller 5a, so as to further facilitate its insertion toward the passage opening.

Moreover, the particular inclination of the movement direction 101 with respect to the advancement direction 100 of the conveyor belt 3, and consequently of the dough shapes 4, allows the contact element 6a to have a component of motion, in the step for approach to the upper surface 4a of the respective dough shape 4, which is parallel to the advancement direction 100, so as to make the contact with the contact element 6a in the active condition less "traumatic" for the dough shape 4.

Moreover, the presence of the longitudinal blades makes it possible to render the longitudinal speed of the shape 4 independent of the speed of the contact element 6a, consequently avoiding distortions or accumulations caused by differences between the calibration speed (which is higher) and the speed of the contact body 6a.

With reference to the embodiment shown in Figure 1, the supporting footing, and particularly the two shoulders 2a and 2b, is connected kinematically to an elongated body 7, which is extended transversely to the advancement direction 100.

The elongated body 7 supports at least two contact elements 6a which are mutually spaced along their direction of longitudinal extension 102.

The relative movement means 10 are adapted to move the elongated body 7, and consequently the contact elements 6a associated with them, along the movement direction 101.

According to a possible embodiment, the relative movement means 10 comprise at least one pinion 12, which is arranged so that its rotation axis 103 is transverse to the advancement advancements direction 100.

The pinion 12 can be moved on command about its own rotation axis 103 by way of the actuation of motor means and meshes with a respective rack 13 which is integral with the elongated body 7 and is arranged so that its longitudinal axis is parallel to the movement direction 101.

Advantageously, the relative movement means 10 comprise a motion transmission bar 14, which is connected to the first motor means and can rotate on command about the rotation axis 103 which is arranged transversely to the advancement direction 100.

A first pinion and a second pinion 12 are keyed substantially at the end portions of the transmission bar 14 and respectively mesh with a first rack and a second rack 13, which are arranged substantially at the longitudinal ends of the elongated body 7.

By way of example, the motor means can be constituted by at least one pneumatic cylinder 15, in which the cylinder body 15a is supported so that it can rotate about an axis 105 which is transverse to the advancement direction 100 by the supporting footing and with a stem 15b which is connected to a first end of a crank 16. The second end of the crank 16 is connected to the transmission bar 14.

Of course, nothing prevents the use of electric motors as motor means for moving the transmission bar 14 about its own axis.

The dough shapes 4 can be triangular: in this case, conveniently, the apparatus 1 has, upstream of the calibration device 5 with respect to the advancement direction 100, a device 8 for spacing and aligning the triangular dough shapes 4, which is designed to orient the triangular dough shapes 4 so that their base 4b is oriented in the advancement direction 100.

Moreover, in this case the apparatus 1 is provided with a device for rolling the dough shapes 4 which is per se known and is not shown in the figures.

Operation of the apparatus 1 according to the invention is evident from what has been described above.

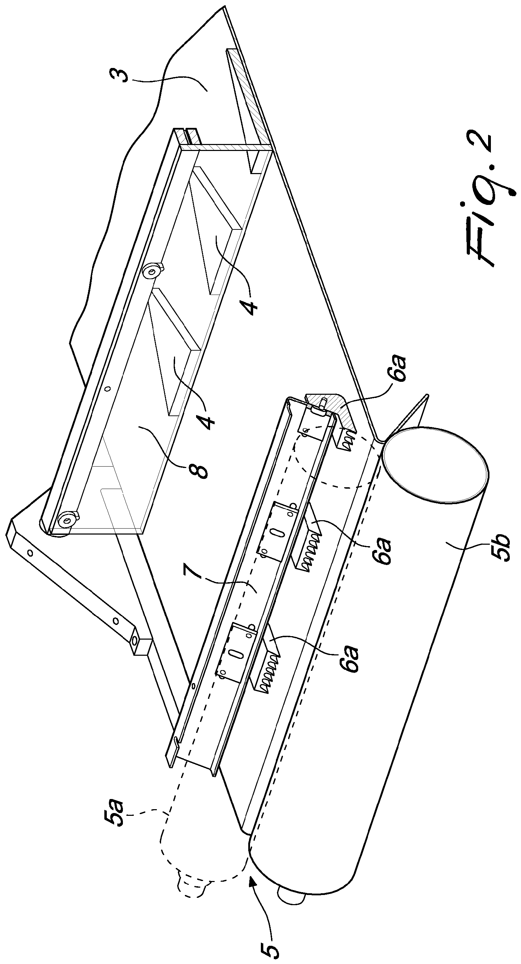

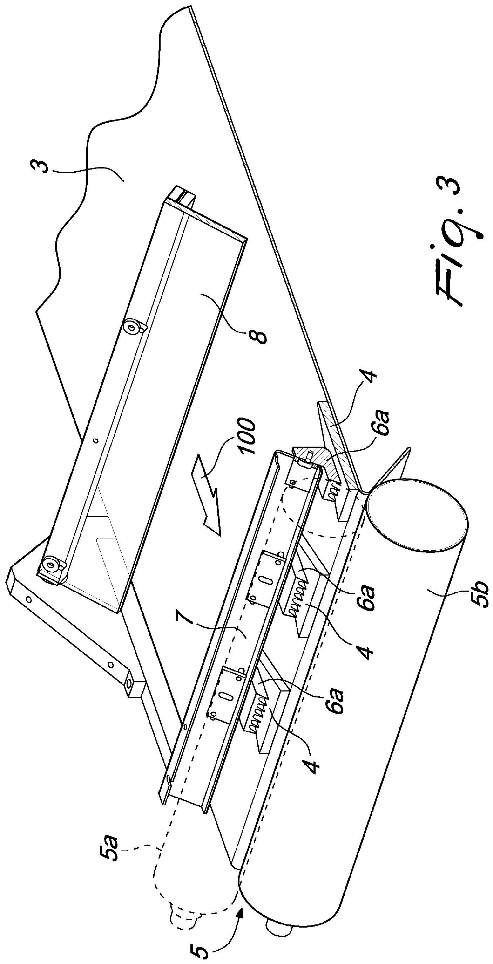

In particular, the dough shapes 4 are fed along the advancement direction 100 by the conveyor belt 3 to the calibration device 5 (Figure 2 and Figure 3).

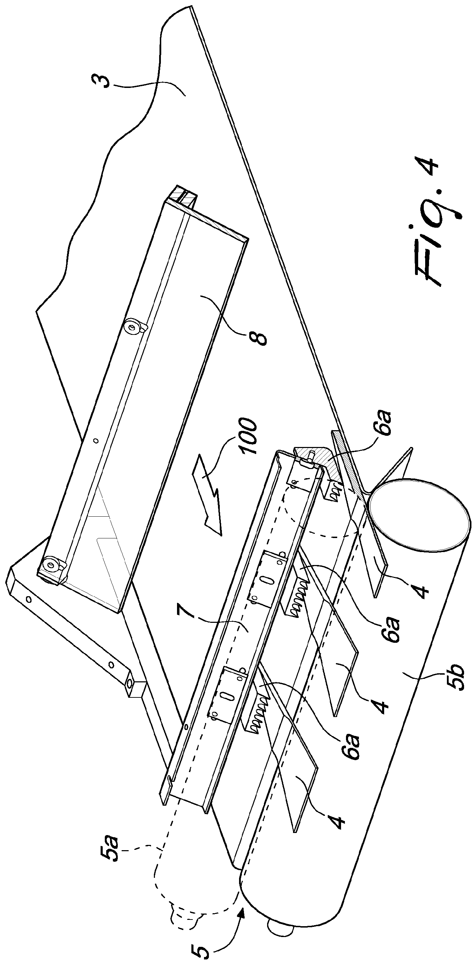

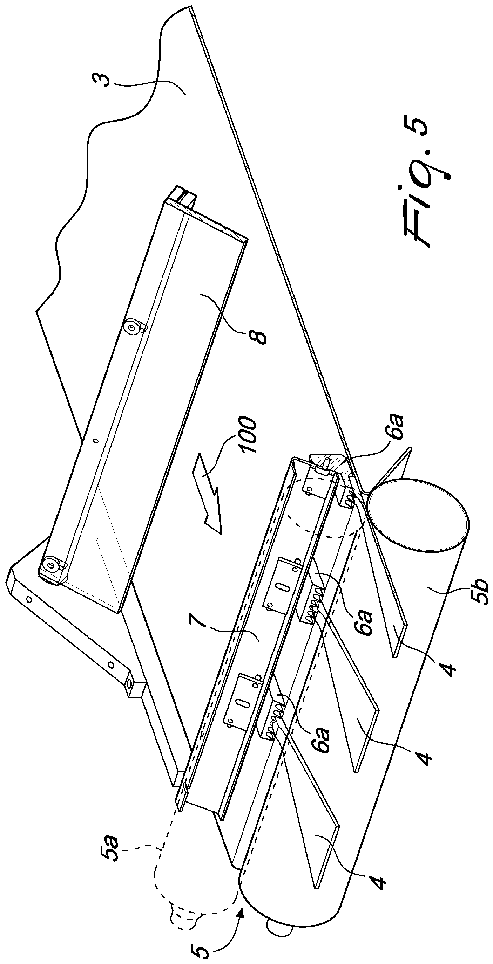

When the dough shapes 4 are inserted partially between the calibration opening and therefore engage with their front portion the calibration device 5, the presser body 6 is moved from the inactive condition to the active condition (Figures 4 and 5), so as to press on the rear portion of the dough shape 4, blocking its transverse movement, until the calibration step is completed, thus ensuring an extremely precise calibration process.

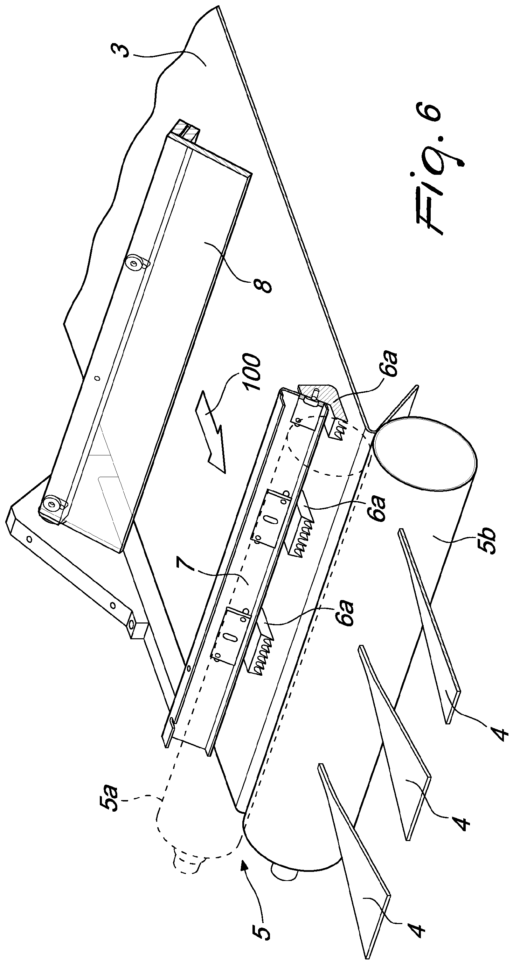

The relative movement means 10 return, after a preset time period, the presser bodies to the inactive condition (Figure 6) so that the device can process a new series of dough triangles.

All the characteristics of the invention indicated above as advantageous, convenient and the like may also be omitted or be replaced with equivalents.

The invention thus conceived is susceptible of numerous modifications and variations, all of which are within the scope of the appended claims.

In practice it has been found that the invention has achieved the intended aim and objects in all the embodiments.

In particular, the presence of longitudinal blades on the contact elements 6a prevents the dough shapes 4 from performing transverse movements, allowing instead their advancement toward the calibration device 5 at the speed determined by the calibration rollers (5a, 5b).

Moreover, the pointed shape of the contact elements 6a makes it possible to guide the dough shape 4 to the passage opening between the calibration rollers 5a and 5b.

Due to the reduced space occupation of the contact element 6a, the apparatus 1 according to the invention makes it possible to increase the number of beats of the machine because it does not engage the incoming dough shapes 4.

Finally, the reduced weight of the moving masses (presser bodies 6) allows promptness and speed in motion, as well as ease in format changing.

In practice, the materials used, as well as the contingent shapes and dimensions, may be any according to requirements.

All the details may furthermore be replaced with other technically equivalent elements.

The disclosures in Italian Patent Application no. VR2011A000088, are those from which this application claims priority.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for making dough, particularly for preparing croissants, comprising:
a belt (3) for conveying dough shapes (4), said conveyor belt (3) being movable along an advancement direction (100) and being associated with at least one device (5) for calibrating said dough shapes (4) between a calibration opening thereof;
at least one presser body (6), which is arranged upstream of said calibration device (5) with respect to the advancement direction (100) of said conveyor belt (3), said at least one presser body (6) being movable with respect to said conveyor belt (3) between an inactive condition, in which it is spaced from a dough shape (4) that advances on said conveyor belt (3), and an active condition, in which it is kept pressed against the dough shape surface (4a) that is arranged upward during use of said dough shape (4) that advances on said conveyor belt (3),
**characterized in that** it further comprises
means (10) being provided for relative movement of said at least one presser body (6) with respect to said dough shape (4), said means being adapted to allow the temporary transition of said at least one presser body (6) into said active condition, when the dough shapes (4) are inserted partially between said calibration opening of said calibration device (5) and therefore engage with their front portion the calibration device (5),
so as to press at said upper surface (4a) of said dough shape (4) on a portion thereof located to the rear along the advancement direction (100), blocking its transverse movement until the calibration is completed.

2. The apparatus (1) according to claim 1, **characterized in that** said presser body (6) is kept in the active condition in order to make contact with said at least one dough shape (4) for a presettable period of time, said relative movement means (10) being adapted to return said at least one presser body (6) to the inactive condition once said presettable period of time has elapsed.

3. The apparatus (1) according to one or more of the preceding claims, **characterized in that** said at least one presser body (6) comprises at least one contact element (6a), which is designed to engage said rear portion of a respective dough shape (4) in order to block its transverse movement during the passage of the front portion of said dough shape (4) through said calibration device (5).

4. The apparatus (1) according to claim 3, **characterized in that** it comprises a supporting footing for said at least one contact element (6a), said relative movement means (10) comprising at least one linear actuator (11) which is adapted to move said at least one contact element (6a) between said active condition and said inactive condition along a respective movement direction (101).

5. The apparatus (1) according to one or more of the preceding claims, **characterized in that** said movement direction (101) is inclined with respect to the advancement direction (100) toward said calibration device (5), passing from said inactive condition to said active condition.

6. The apparatus (1) according to one or more of the claims 4 or 5, **characterized in that** said supporting footing is connected kinematically to an elongated body (7) which lies transversely with respect to said advancement direction (100), said elongated body (7) supporting at least two contact elements (6a) which are mutually spaced along the direction of longitudinal extension of said elongated body (7) and being moved by said relative movement means (10) along said movement direction (101).

7. The apparatus (1) according to one or more of the preceding claims, **characterized in that** said relative movement means (10) comprise at least one pinion (12), which is arranged so that its rotation axis (103) lies transversely to said advancement direction (100) and can be moved on command about its own rotation axis (103) by way of the actuation of motor means, said at least one pinion (12) meshing with a respective rack (13), which is jointly connected to said elongated body (7) and is arranged so that its longitudinal axis is parallel to said movement direction (101).

8. The apparatus (1) according to one or more of the preceding claims, **characterized in that** said relative movement means (10) comprise a motion transmission bar (14), which is connected to said motor means and can rotate on command about a rotation axis which lies transversely to said advancement direction (100), a first pinion and a second pinion (12) being keyed substantially at the end portions of said transmission bar (14) and meshing respectively with a first rack and a second rack (13), which are arranged substantially at the longitudinal ends of said elongated body (7).

9. The apparatus (1) according to one or more of the claims 7 or 8, **characterized in that** said motor means comprise at least one pneumatic cylinder (15) in which the cylinder body (15a) is supported, so that it can rotate about an axis (105) which is transverse to said advancement direction (100), by said supporting footing and a stem (15b) which is connected to a first end of a crank (16), the second end of said crank (16) being connected to said transmission bar (14).

10. The apparatus (1) according to one or more of the preceding claims, **characterized in that** said dough shapes (4) are triangular, upstream of said calibration device (5) with respect to the advancement direction (100) a device (8) being provided for spacing and aligning the triangular dough shapes which is intended to orient said triangular dough shapes so that their base (4b) is oriented toward the advancement direction (100).

11. The apparatus (1) according to one or more of the claims 2-10, **characterized in that** said contact elements (6a) have, at the surface that is designed to make contact against the respective dough shape (4), at least two longitudinal blades, which run substantially parallel to the advancement direction (100) and are designed to cut into and guide said dough shape (4) with said presser body (6) in the active condition.

## Patentansprüche

1. Eine Vorrichtung (1) zur Herstellung von Teig, insbesondere zur Herstellung von Croissants, die Folgendes umfasst:
ein Band (3) zum Befördern von Teigformlingen (4), wobei das Förderband (3) entlang einer Vorschubrichtung (100) beweglich und mit mindestens einer Vorrichtung (5) zum Kalibrieren der Teigformlinge (4) zwischen einer Kalibrieröffnung derselben verbunden ist;
mindestens einen Druckkörper (6), der stromaufwärts von der Kalibriervorrichtung (5) mit Bezug auf die Vorschubrichtung (100) des Förderbandes (3) angeordnet ist, wobei der mindestens eine Druckkörper (6) im Verhältnis zu dem Förderband (3) beweglich ist zwischen einem inaktiven Zustand, in dem er von einem Teigformling (4), der sich auf dem Förderband (3) vorwärts bewegt, beabstandet ist, und einem aktiven Zustand, in dem er gegen die Teigformlingoberfläche (4a) gepresst gehalten wird, die im Gebrauch des Teigformlings (4), der sich auf dem Förderband (3) vorwärts bewegt, oben angeordnet ist,
**dadurch gekennzeichnet, dass** er weiter Folgendes umfasst:
Mittel (10), die für die Relativbewegung des mindestens einen Druckkörpers (6) im Verhältnis zu dem Teigformling (4) bereitgestellt werden, wobei die Mittel ausgebildet sind, um den vorübergehenden Übergang des mindestens einen Druckkörpers (6) in den aktiven Zustand zu ermöglichen, wenn die Teigformlinge (4) zum Teil zwischen der Kalibrieröffnung der Kalibriervorrichtung (5) eingeführt sind und daher mit ihrem vorderen Teil in die Kalibriervorrichtung (5) eingreifen,
um so die obere Oberfläche (4a) des Teigformlings (4) auf einen Abschnitt davon zu pressen, der sich entlang der Vorschubrichtung (100) hinten befindet, wodurch seine Querbewegung blockiert wird, bis die Kalibrierung abgeschlossen ist.

2. Die Vorrichtung (1) gemäß Anspruch 1, **dadurch gekennzeichnet, dass** der Druckkörper (6) für einen voreinstellbaren Zeitraum im aktiven Zustand gehalten wird, um in Kontakt mit dem mindestens einen Teigformling (4) zu stehen, wobei die Relativbewegungsmittel (10) ausgebildet sind, um den mindestens einen Druckkörper (6) in den inaktiven Zustand zurückzuversetzen, sobald der voreinstellbare Zeitraum verstrichen ist.

3. Die Vorrichtung (1) gemäß einem oder mehreren der obigen Ansprüche, **dadurch gekennzeichnet, dass** der mindestens eine Druckkörper (6) mindestens ein Kontaktelement (6a) umfasst, das konstruiert ist, um den hinteren Teil eines jeweiligen Teigformlings (4) zu halten, um seine Querbewegung während des Durchlaufs des vorderen Teils des Teigformlings (4) durch die Kalibriervorrichtung (5) zu blockieren.

4. Die Vorrichtung (1) gemäß Anspruch 3, **dadurch gekennzeichnet, dass** sie einen Sockel für das mindestens eine Kontaktelement (6a) umfasst, wobei die Relativbewegungsmittel (10) mindestens ein lineares Antriebselement (11) umfassen, das ausgebildet ist, um das mindestens eine Kontaktelement (6a) entlang einer entsprechenden Bewegungsrichtung (101) zwischen dem aktiven Zustand und dem inaktiven Zustand zu bewegen.

5. Die Vorrichtung (1) gemäß einem oder mehreren der obigen Ansprüche, **dadurch gekennzeichnet, dass** die Bewegungsrichtung (101) im Verhältnis zur Vorschubrichtung (100) zu der Kalibriervorrichtung (5) hin geneigt ist, wobei sie von dem inaktiven Zustand in den aktiven Zustand übergeht.

6. Die Vorrichtung (1) gemäß einem oder mehreren der Ansprüche 4 oder 5, **dadurch gekennzeichnet, dass** der Sockel kinematisch mit einem verlängerten Körper (7) verbunden ist, der quer zu der Vorschubrichtung (100) liegt, wobei der verlängerte Körper (7) mindestens zwei Kontaktelemente (6a) trägt, die entlang der Richtung der Längsausdehnung des verlängerten Körpers (7) voneinander beabstandet sind und von den Relativbewegungsmitteln (10) entlang der Bewegungsrichtung (101) bewegt werden.

7. Die Vorrichtung (1) gemäß einem oder mehreren der obigen Ansprüche, **dadurch gekennzeichnet, dass** die Relativbewegungsmittel (10) mindestens ein Ritzel (12) umfassen, das so angeordnet ist, dass seine Drehachse (103) quer zu der Vorschubrichtung (100) liegt, und auf Befehl durch Betätigung von Motormitteln um seine eigene Drehachse (103) bewegt werden kann, wobei das mindestens eine Ritzel (12) in eine entsprechende Zahnstange (13) eingreift, die fest mit dem verlängerten Körper (7) verbunden und so angeordnet ist, dass ihre Längsachse parallel zu der Bewegungsrichtung (101) ist.

8. Die Vorrichtung (1) gemäß einem oder mehreren der obigen Ansprüche, **dadurch gekennzeichnet, dass** die Relativbewegungsmittel (10) einen Bewegungsübertragungsstab (14) umfassen, der mit den Motormitteln verbunden ist und sich auf Befehl um eine Drehachse drehen kann, die quer zu der Vorschubrichtung (100) liegt, wobei ein erstes Ritzel und ein zweites Ritzel (12) im Wesentlichen an den Endabschnitten des Übertragungsstabs (14) verkeilt sind und in eine erste Zahnstange beziehungsweise eine zweite Zahnstange (13) eingreifen, welche im Wesentlichen an den Längsenden des verlängerten Körpers (7) angeordnet sind.

9. Die Vorrichtung (1) gemäß einem oder mehreren der Ansprüche 7 oder 8, **dadurch gekennzeichnet, dass** die Motormittel mindestens einen Pneumatikzylinder (15) umfassen, in dem der Zylinderkörper (15a) von dem Sockel und einem Stamm (15b), welcher mit einem ersten Ende einer Kurbel (16) verbunden ist, um eine Achse (105) drehbar gelagert ist, die quer zu der Vorschubrichtung (100) ist, wobei das zweite Ende der Kurbel (16) mit dem Übertragungsstab (14) verbunden ist.

10. Die Vorrichtung (1) gemäß einem oder mehreren der obigen Ansprüche, **dadurch gekennzeichnet, dass** die Teigformlinge (4) dreieckig sind, wobei stromaufwärts von der Kalibriervorrichtung (5) mit Bezug auf die Vorschubrichtung (100) eine Vorrichtung (8) zum Beabstanden und Ausrichten der dreieckigen Teigformlinge bereitgestellt ist, die dazu dient, die dreieckigen Teigformlinge so auszurichten, dass ihre Basis (4b) zur Vorschubrichtung (100) hin ausgerichtet ist.

11. Die Vorrichtung (1) gemäß einem oder mehreren der Ansprüche 2-10, **dadurch gekennzeichnet, dass** die Kontaktelemente (6a) an der Oberfläche, die dazu dient, in Kontakt mit dem entsprechenden Teigformling (4) zu stehen, mindestens zwei längliche Klingen haben, die sich im Wesentlichen parallel zur Vorschubrichtung (100) erstrecken und dazu dienen, in den Teigformling (4) zu schneiden und ihn zu führen, wenn der Druckkörper (6) sich im aktiven Zustand befindet.

## Revendications

1. Appareil (1) pour fabriquer une pâte, en particulier pour préparer des croissants, comprenant :
une courroie (3) pour convoyer des formes de pâte (4), ladite courroie convoyeuse (3) étant mobile le long d'une direction d'avance (100) et étant associée à au moins un dispositif (5) pour calibrer lesdites formes de pâte (4) entre une ouverture de calibration de celui-ci ;
au moins un corps presseur (6), qui est disposé en amont dudit dispositif de calibration (5) par rapport à la direction d'avance (100) de ladite courroie convoyeuse (3), ledit corps presseur au nombre d'au moins un (6) étant mobile par rapport à ladite courroie convoyeuse (3) entre une condition inactive, dans laquelle il est espacé d'une forme de pâte (4) qui avance sur ladite courroie convoyeuse (3), et une condition active, dans laquelle il est maintenu pressé contre la surface de forme de pâte (4a) qui est située en amont durant l'utilisation de ladite forme de pâte (4) qui avance sur ladite courroie convoyeuse (3),
**caractérisé en ce qu'**il comprend de plus :
des moyens (10) disposés pour un mouvement relatif dudit corps presseur au nombre d'au moins un (6) par rapport à ladite forme de pâte (4), lesdits moyens étant adaptés de façon à permettre la transition temporaire dudit corps presseur au nombre d'au moins un (6) dans ladite condition active, lorsque les formes de pâtes (4) sont partiellement insérées entre ladite ouverture de calibration dudit dispositif de calibration (5), et viennent par conséquent en prise par leur partie avant avec le dispositif de calibration (5),
de façon à effectuer une pression au niveau de ladite surface supérieure (4a) de ladite forme de pâte (4) sur une partie de celle-ci située à l'arrière le long de la direction d'avance (100), bloquant son mouvement transversal jusqu'à ce que la calibration soit achevée.

2. Appareil (1) selon la revendication 1, **caractérisé en ce que** ledit corps presseur (6) est maintenu dans la condition active de façon à venir en contact avec ladite forme de pâte au nombre d'au moins une (4) pendant une période de temps pouvant être pré-établie, lesdits moyens de mouvement relatif (10) étant adaptés de façon à remettre ledit corps presseur au nombre d'au moins un (6) dans la condition inactive une fois que ladite période de temps pouvant être pré-établie s'est écoulée.

3. Appareil (1) selon l'une ou plusieurs des revendications précédentes, **caractérisé en ce que** ledit corps presseur au nombre d'au moins un (6) comprend au moins un élément de contact (6a), qui est conçu de façon à venir en prise avec ladite partie arrière d'une forme de pâte respective (4) de façon à bloquer son mouvement transversal durant le passage de la partie avant de ladite forme de pâte (4) à travers ledit dispositif de calibration (5).

4. Appareil (1) selon la revendication 3, **caractérisé en ce qu'**il comprend un socle de support pour ledit élément de contact au nombre d'au moins un (6a), lesdits moyens de mouvement relatif (10) comprenant au moins un actionneur linéaire (11) qui est adapté de façon à déplacer ledit élément de contact au nombre d'au moins un (6a) entre ladite condition active et ladite condition inactive le long d'une direction de mouvement respective (101).

5. Appareil (1) selon l'une ou plusieurs des revendications précédentes, **caractérisé en ce que** ladite direction de mouvement (101) est inclinée par rapport à la direction d'avance (100) vers ledit dispositif de calibration (5), passant de ladite condition inactive à ladite condition active.

6. Appareil (1) selon l'une ou plusieurs des revendications 4 ou 5, **caractérisé en ce que** ledit socle de support est relié de façon cinématique à un corps allongé (7) qui est disposé transversalement par rapport à ladite direction d'avance (100), ledit corps allongé (7) supportant au moins deux éléments de contact (6a) qui sont mutuellement espacés le long de la direction d'extension longitudinale dudit corps allongé (7) et étant déplacé par lesdits moyens de mouvement relatif (10) le long de ladite direction de mouvement (101).

7. Appareil (1) selon l'une ou plusieurs des revendications précédentes, **caractérisé en ce que** lesdits moyens de mouvement relatif (10) comprennent au moins un pignon (12), qui est agencé de telle sorte que son axe de rotation (103) soit situé transversalement par rapport à ladite direction d'avance (100) et qu'il puisse être déplacé sur commande autour de son propre axe de rotation (103) à l'aide de l'actionnement de moyens formant moteur, ledit pignon au nombre d'au moins un (12) s'engrenant avec une crémaillère respective (13), qui est reliée conjointement audit corps allongé (7) et qui est agencée de telle sorte que son axe longitudinal soit parallèle à ladite direction de mouvement (101).

8. Appareil (1) selon l'une ou plusieurs des revendications précédentes, **caractérisé en ce que** lesdits moyens de mouvement relatif (10) comprennent une barre de transmission de mouvement (14), qui est reliée auxdits moyens formant moteur et qui peut tourner sur commande autour d'un axe de rotation qui est situé transversalement par rapport à ladite direction d'avance (100), un premier pignon et un deuxième pignon (12) étant clavetés sensiblement aux parties d'extrémité de ladite barre de transmission (14) et s'engrenant respectivement avec une première crémaillère et une deuxième crémaillère (13), qui sont disposées sensiblement aux extrémités longitudinales dudit corps allongé (7).

9. Appareil (1) selon l'une ou plusieurs des revendications 7 ou 8, **caractérisé en ce que** lesdits moyens formant moteur comprennent au moins un cylindre pneumatique (15) dans lequel le corps de cylindre (15a) est supporté, de telle sorte qu'il puisse tourner autour d'un axe (105) qui est transversal à ladite direction d'avance (100), par ledit socle de support et une tige (15b) qui est reliée à une première extrémité d'une manivelle (16), la deuxième extrémité de ladite manivelle (16) étant reliée à ladite barre de transmission (14).

10. Appareil (1) selon l'une ou plusieurs des revendications précédentes, **caractérisé en ce que** lesdites formes de pâte (4) sont triangulaires, en amont dudit dispositif de calibration (5) par rapport à la direction d'avance (100), un dispositif (8) étant disposé pour espacer et aligner les formes de pâte triangulaires, celui-ci étant conçu de façon à orienter lesdites formes de pâte triangulaires de telle sorte que leur base (4b) soit orientée vers la direction d'avance (100).

11. Appareil (1) selon l'une ou plusieurs des revendications 2 à 10, **caractérisé en ce que** lesdits éléments de contact (6a) comportent, à la surface qui est conçue pour venir en contact avec la forme de pâte respective (4), au moins deux lames longitudinales, qui s'étendent de façon sensiblement parallèle à la direction d'avance (100) et qui sont conçues de façon à couper dans ladite forme de pâte (4) et à guider celle-ci avec ledit corps presseur (6) dans la condition active.
